# EUROPEAN PATENT APPLICATION

(11) **EP 4 797 583 A1**
(43) Date of publication of application: **26.08.2026**
(21) Application number: 24887986.8
(22) Date of filing: 06.11.2024
(51) Int. Cl.: H04L 1/00

(54) **COMMUNICATION METHOD AND APPARATUS**

(30) Priority: 10.11.2023 CN 202311502203
(71) Applicant: HUAWEI TECHNOLOGIES CO., LTD., Shenzhen 518129 (CN)
(72) Inventor: WANG, Xianbin, Shenzhen, Guangdong 518129 (CN); ZHANG, Huazi, Shenzhen, Guangdong 518129 (CN); TONG, Jiajie, Shenzhen, Guangdong 518129 (CN); QIN, Kangjian, Shenzhen, Guangdong 518129 (CN); LIU, Ke, Shenzhen, Guangdong 518129 (CN); WANG, Jun, Shenzhen, Guangdong 518129 (CN); TONG, Wen, Shenzhen, Guangdong 518129 (CN)
(74) Representative: Goddar, Heinz J.
(86) International application number: PCT/CN2024/130165
(87) International publication number: WO 2025/098375

(57) **Abstract**

A communication method and apparatus are provided, relating to the field of communication technologies, to improve decoding performance and improve flexibility of polar codes used for HARQ transmission. The method includes: performing polar encoding on an information bit sequence with a length of K to obtain a first sequence with a length of M₀, where K is less than or equal to M₀; and when x^{th} data retransmission is performed, sending Ex bits in the first sequence, where x is a positive integer, and one or more bits among the Ex bits are bits repeated one or more times among bits from initial data transmission to the x^{th} data retransmission.

## Description

This application claims priority to Chinese Patent Application No. 202311502203.6, filed with the China National Intellectual Property Administration on November 10, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In communication system, a transmitter device may construct polar codes (Polar code) used for hybrid automatic repeat request (hybrid automatic repeat request, HARQ) transmission. Based on the polar codes, the transmitter device may send an initial transmission sequence to a receiver device, and the receiver device receives the symbol sequence and attempts to decode the symbol sequence. If the decoding fails, the transmitter device may use retransmission resources to send a retransmission sequence to the receiver device, and the receiver device may jointly decode the symbol sequences received in two transmissions.

The retransmission resources are determined through system scheduling, and there may be a small or large quantity of retransmission resources. In view of this, a scheme in which coding supports a rateless (Rateless) transmission may be adopted. To be specific, encoding can be completed in advance, a quantity of codeword bits to be transmitted is determined based on a quantity of retransmission resources, and then a corresponding quantity of codeword bits are extracted from an encoding result for transmission.

### SUMMARY

Embodiments of this application provide a communication method and apparatus, to improve decoding performance and improve flexibility of a polar code used for HARQ transmission.

According to a first aspect, an embodiment of this application provides a communication method. The method may be performed by a transmitter device. Unless otherwise specified, the "transmitter device" in this application may be the transmitter device, or may be a component (for example, a processor, a chip, or a chip system) in the transmitter device, or may be a logical module or software that can implement all or a part of functions of the transmitter device. The method includes: performing polar encoding on an information bit sequence with a length of K to obtain a first sequence with a length of M₀, where K is less than or equal to M₀; and when x^{th} data retransmission is performed, sending Ex bits in the first sequence, where x is a positive integer, and one or more bits among the Ex bits are bits repeated one or more times among bits from initial data transmission to the x^{th} data retransmission.

Based on the first aspect, when the transmitter device performs the x^{th} data retransmission, the sent Ex bits may include the bits repeated one or more times among the bits included in the initial data transmission to the x^{th} data retransmission. Therefore, through local retransmission, decoding performance of a polar code used for HARQ transmission is improved, and performance stability and flexibility of the polar code are improved.

In a possible design, the sending the Ex bits in the first sequence includes: sending bits at a start position to a first position Bx of the x^{th} data retransmission and the one or more bits among the Ex bits, where the first position Bx is a predefined first position.

Based on this possible design, the first position is defined, so that local retransmission can be introduced based on the first position, thereby improving performance stability of a polar code used for HARQ transmission. In addition, the polar code used for HARQ transmission provided in this embodiment of this application may further support 1-bit fine-grained transmission, thereby helping improve decoding performance.

In a possible design, the first position Bx is a predefined first position immediately preceding an end position of the x^{th} data retransmission, and the end position of the x^{th} data retransmission is determined based on the start position of the x^{th} data retransmission and a sending length Ex of the x^{th} data retransmission.

Based on this possible design, the first position Bx may be the predefined first position immediately preceding the end position of the x^{th} data retransmission, to minimize the occurrence of bad points while maximizing transmission performance.

In a possible design, the first sequence includes one or more predefined first positions.

In a possible design, the first position is a position of a bit that can be successfully decoded in the first sequence.

Based on the foregoing two possible designs, because the first position is the position of the bit that can be successfully decoded, performing local retransmission based on the first position can effectively improve decoding performance.

In a possible design, the predefined first position includes a position of one or more of the following bits: a position of an (M₀/2)^{th} bit, a position of a (3M₀/8)^{th} bit, a position of an (M₀/4)^{th} bit, a position of an (M₀/8)^{th} bit, and a position of a 0^{th} bit.

Based on this possible design, the design is easy to implement, and coding complexity is reduced.

In a possible design, the predefined first position includes a position of one or more of the following bits: a position of an (M₀/2)^{th} bit, a position of a (7M₀/16)^{th} bit, a position of a (3M₀/8)^{th} bit, a position of a (5M₀/16)^{th} bit, a position of an (M₀/4)^{th} bit, a position of a (3M₀/16)^{th} bit, a position of an (M₀/8)^{th} bit, a position of an (M₀/16)^{th} bit, and a position of a 0^{th} bit.

Based on this possible design, system flexibility can be improved.

In a possible design, the predefined first position includes a position of one or more of the following bits: a position of an (M₀/2)^{th} bit, a position of a (15M₀/32)^{th} bit, a position of a (7M₀/16)^{th} bit, a position of a (13M₀/32)^{th} bit, a position of a (3M₀/8)^{th} bit, a position of an (11M₀/32)^{th} bit, a position of a (5M₀/16)^{th} bit, a position of a (9M₀/32)^{th} bit, a position of an (M₀/4)^{th} bit, a position of a (7M₀/32)^{th} bit, a position of a (3M₀/16)^{th} bit, a position of a (5M₀/32)^{th} bit, a position of an (M₀/8)^{th} bit, a position of a (3M₀/32)^{th} bit, a position of an (M₀/16)^{th} bit, a position of an (M₀/32)^{th} bit, and a position of a 0^{th} bit.

Based on this possible design, system flexibility can be further improved.

In a possible design, the sending the Ex bits in the first sequence includes: when a ratio of a first quantity to a second quantity is greater than a preset code rate threshold, sending the Ex bits in the first sequence, where the first quantity is a quantity of information bits at the end position to the first position Bx of the x^{th} data retransmission, and the second quantity is a quantity of bits at the end position to the first position Bx of the x^{th} data retransmission.

In a possible design, the first sequence includes a second sequence with a length of M₁ and a third sequence with a length of (M₀-M₁), and the sending the Ex bits in the first sequence includes: when the end position of the x^{th} data retransmission is after the second sequence and before a 1^{st} first position of the third sequence, sending the Ex bits in the first sequence, where the end position of the x^{th} data retransmission is determined based on the start position of the x^{th} data retransmission and the sending length Ex of the x^{th} data retransmission.

Based on the foregoing two possible designs, the transmitter device may send the Ex bits in the first sequence when any one of the foregoing conditions is met, thereby improving decoding performance.

In a possible design, when the end position of the x^{th} data retransmission is after the 1^{st} first position of the third sequence, Ex bits at the start position of the x^{th} data retransmission to the end position of the x^{th} data retransmission are sent.

Based on this possible design, coding performance can be improved.

In a possible design, a start bit of the one or more bits among the Ex bits is a bit at the start position of the x^{th} data retransmission; or a start bit of the one or more bits among the Ex bits is a bit at a start position of (x-1)^{th} data retransmission; or a start bit of the one or more bits among the Ex bits is a bit at a start position of the initial data transmission; or a start bit of the one or more bits among the Ex bits is a bit at a predefined position; or a start bit of the one or more bits among the Ex bits is a bit at a second position before the first position Bx, where the first position Bx is the predefined first position, and bits at the second position to the bit at the first position Bx are the one or more bits.

Based on this possible design, a plurality of feasible solutions are provided for a design of the start bit of the one or more bits among the Ex bits.

In a possible design, the performing polar encoding on the information bit sequence with a length of K to obtain the first sequence with a length of M₀ includes: performing polar encoding on the information bit sequence to obtain a fourth sequence with a length of N₀; and performing rate matching on the fourth sequence to obtain the first sequence.

In a possible design, when a rate matching manner is shortening, a shortened bit in the fourth sequence is removed to obtain the first sequence; or when a rate matching manner is puncturing or repetition, the first sequence is the fourth sequence.

Based on the foregoing two possible designs, the transmitter device may perform rate matching on the fourth sequence to obtain the first sequence, thereby improving decoding performance.

In a possible design, the performing polar encoding on the information bit sequence with a length of K to obtain the first sequence with a length of M₀ includes: performing polar encoding on the information bit sequence to obtain a fourth sequence with a length of N₀; and interleaving the fourth sequence to obtain the first sequence.

In a possible design, the interleaving the fourth sequence to obtain the first sequence includes: interleaving the fourth sequence based on a plurality of interleaving patterns to obtain the first sequence, where different interleaving patterns correspond to different bits in the fourth sequence.

In a possible design, a fifth sequence in the fourth sequence is interleaved based on a first interleaving pattern, and a sixth sequence in the fourth sequence is interleaved based on a second interleaving pattern, to obtain the first sequence, where the fourth sequence includes the fifth sequence with a length of N₁ and the sixth sequence with a length of (N₀-N₁).

Based on the foregoing three possible designs, the transmitter device may interleave the fourth sequence to obtain the first sequence, thereby improving decoding performance.

According to a second aspect, an embodiment of this application provides a communication method. The method may be performed by a receiver device. Unless otherwise specified, the "receiver device" in this application may be the receiver device, or may be a component (for example, a processor, a chip, or a chip system) in the receiver device, or may be a logical module or software that can implement all or a part of functions of the receiver device. The method includes: receiving a symbol sequence from a transmitter device; and decoding the symbol sequence based on positions of one or more bits to obtain decoded data, where the positions of the one or more bits are positions of bits repeated one or more times among bits from initial data transmission to x^{th} data retransmission, and x is a positive integer.

Based on the second aspect, when the transmitter device and the receiver device perform the x^{th} data retransmission, sent Ex bits may include the bits repeated one or more times among the bits included in the initial data transmission to the x^{th} data retransmission. The receiver device may decode the symbol sequence based on the positions of the one or more bits. Therefore, through local retransmission, decoding performance of a polar code used for HARQ transmission is improved, and performance stability and flexibility of the polar code are improved.

In a possible design, a position of a start bit of the one or more bits is a start position of the x^{th} data retransmission; or a position of a start bit of the one or more bits is a start position of (x-1)^{th} data retransmission; or a position of a start bit of the one or more bits is a start position of the initial data transmission; or a position of a start bit of the one or more bits is a predefined position; or a position of a start bit of the one or more bits is a second position before a first position Bx, where the first position Bx is a predefined first position, and the second position to the first position Bx are the positions of the one or more bits.

According to a third aspect, an embodiment of this application provides a communication apparatus. The communication apparatus may be used in the transmitter device in the first aspect, to implement a function performed by the transmitter device. The communication apparatus may be the transmitter device, or may be a chip, a chip system, a system on chip, or the like of the transmitter device. The communication apparatus may perform, by hardware or by hardware by executing corresponding software, the function performed by the transmitter device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the processing module may be configured to perform polar encoding on an information bit sequence with a length of K to obtain a first sequence with a length of M₀, where K is less than or equal to M₀; and the transceiver module may be configured to: when x^{th} data retransmission is performed, send Ex bits in the first sequence, where x is a positive integer, and one or more bits among the Ex bits are bits repeated one or more times among bits from initial data transmission to the x^{th} data retransmission.

Optionally, the transceiver module and the processing module of the communication apparatus in the third aspect may further perform corresponding functions in the first aspect or any possible design of the first aspect. For details, refer to the detailed descriptions in the method examples. For beneficial effects that can be achieved, refer to the foregoing related content.

According to a fourth aspect, an embodiment of this application provides a communication apparatus. The communication apparatus may be used in the receiver device in the second aspect, to implement a function performed by the receiver device. The communication apparatus may be the receiver device, or may be a chip, a chip system, a system on chip, or the like of the receiver device. The communication apparatus may perform, by hardware or by hardware by executing corresponding software, the function performed by the receiver device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the transceiver module may be configured to receive a symbol sequence from a transmitter device; and the processing module may be configured to decode the symbol sequence based on positions of one or more bits to obtain decoded data, where the positions of the one or more bits are positions of bits repeated one or more times among bits from initial data transmission to x^{th} data retransmission, and x is a positive integer.

Optionally, the transceiver module and the processing module of the communication apparatus in the fourth aspect may further perform corresponding functions in the second aspect or any possible design of the second aspect. For details, refer to the detailed descriptions in the method examples. For beneficial effects that can be achieved, refer to the foregoing related content.

According to a fifth aspect, an embodiment of this application provides a communication apparatus. The communication apparatus includes one or more processors. The one or more processors are configured to run a computer program or instructions. When the one or more processors execute computer instructions or the instructions, the communication method according to any one of the first aspect and the second aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, an embodiment of this application provides a communication apparatus. The communication apparatus includes an interface circuit and a logic circuit. The interface circuit is configured to input and/or output information. The logic circuit is configured to perform the communication method according to any one of the first aspect or the second aspect, to perform processing based on the information and/or generate the information.

According to a seventh aspect, an embodiment of this application provides a computer-readable storage medium. The computer-readable storage medium stores computer instructions or a program. When the computer instructions or the program is run on a computer, the communication method according to any one of the first aspect or the second aspect is performed.

According to an eighth aspect, an embodiment of this application provides a computer program product including computer instructions. When the computer program product is run on a computer, the communication method according to any one of the first aspect or the second aspect is performed.

According to a ninth aspect, an embodiment of this application provides a computer program. When the computer program is run on a computer, the communication method according to any one of the first aspect or the second aspect is performed.

According to a tenth aspect, an embodiment of this application provides a chip, including a processor. The processor is coupled to a memory, the memory is configured to store a program or instructions, and when the program or the instructions are executed by the processor, the communication method according to any one of the first aspect or the second aspect is performed.

For technical effect brought by any design of the fifth aspect to the tenth aspect, refer to the technical effect brought by any one of the first aspect or the second aspect. Details are not described again.

According to an eleventh aspect, an embodiment of this application provides a communication system. The communication system may include the communication apparatus configured to perform the first aspect or any possible design of the first aspect, or may include the communication apparatus configured to perform the second aspect or any possible design of the second aspect.

### BRIEF DESCRIPTION OF DRAWINGS

FIG. 1 is a diagram of a polar code according to an embodiment of this application;
FIG. 2 is a diagram of a polar code-based IR-HARQ framework according to an embodiment of this application;
FIG. 3A and FIG. 3B are diagrams of polar codes used for HARQ transmission according to embodiments of this application;
FIG. 4A and FIG. 4B are diagrams of polar codes used for HARQ transmission according to embodiments of this application;
FIG. 5 is a diagram of sequence transmission based on sub-block interleaving according to an embodiment of this application;
FIG. 6 is a diagram of a communication system according to an embodiment of this application;
FIG. 7 is a diagram of encoding and decoding performed by a transmitter device and a receiver device according to an embodiment of this application;
FIG. 8 is a diagram of a polar code encoding chain according to an embodiment of this application;
FIG. 9 is a diagram of a communication apparatus according to an embodiment of this application;
FIG. 10 is a flowchart of a communication method according to an embodiment of this application;
FIG. 11A and FIG. 11B are diagrams of circular buffers according to embodiments of this application;
FIG. 12 is a diagram of a transmitter device according to an embodiment of this application;
FIG. 13 is a diagram of a receiver device according to an embodiment of this application; and
FIG. 14 is a diagram of a communication apparatus according to an embodiment of this application.

### DESCRIPTION OF EMBODIMENTS

Before embodiments of this application are described, technical terms used in embodiments of this application are described.

Polar codes (Polar code) are a first channel coding scheme that can be rigorously proven to "achieve" the Shannon channel capacity, offering advantages of good error correction performance and low decoding complexity. Polar codes have been adopted by the third generation partnership project (third generation partnership project, 3GPP as a coding scheme for (uplink/downlink) control channels in enhanced mobile broadband (enhanced mobile broadband, eMBB) scenarios of fifth generation (fifth generation, 5G) mobile communication systems.

In the polar code coding scheme, positions of bits may be classified into a position of a fixed bit (or may be referred to as a position of a frozen bit) and a position of an information bit based on reliability of the positions of the bits. A low-reliability position of a bit is a position of a fixed bit, and may be used to carry a fixed bit (or referred to as a frozen bit, frozen). The fixed bit is usually set to 0, and is known to a transmit end and a receive end in actual transmission. A high-reliability position of a bit is a position of an information bit, and may be used to carry an information bit (data) in actual transmission.

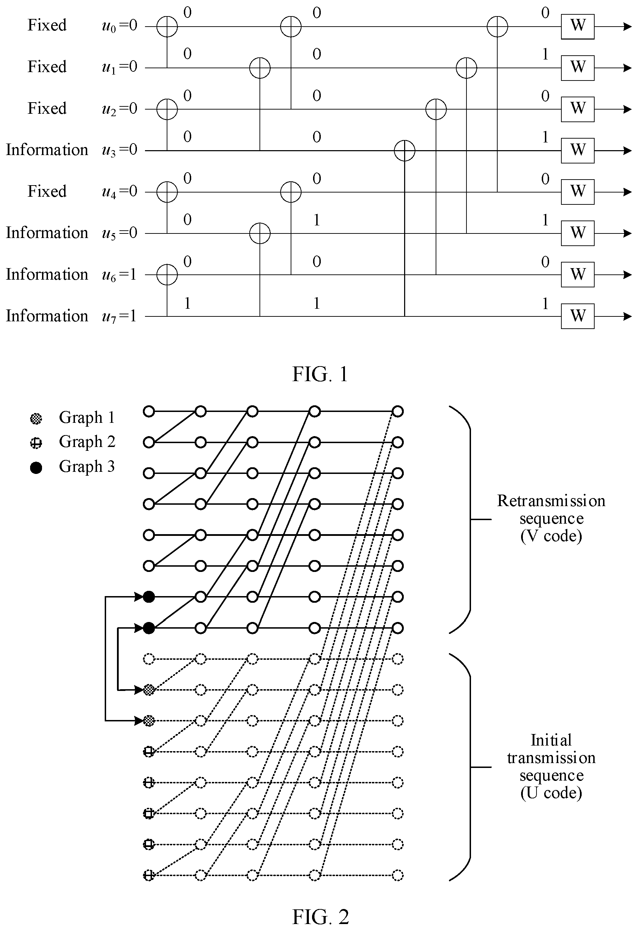

For example, FIG. 1 is a diagram of encoding of a typical polar code with a length of 8. A high-reliability position of a bit (for example, *u*₇, *u*₆, *u*₅, or *u*₃) may be set as a position of an information bit to carry an information bit 0 or 1, and a low-reliability position of a bit (for example, *u*₄, *u*₂, *u*₁, or *u*₀) may be set as a position of a fixed bit to carry a fixed bit 0.

Polar code decoding: With the polar code being incorporated into the 5G standard, research on polar code decoding has become a hot topic in the communication field. Mainstream polar code decoding methods may be classified into two types based on decoding timing: sequential decoding and non-sequential decoding. Sequential decoding means that a decoder decodes bits one by one based on positions of the bits and the inherent serial nature of the polar design. Non-sequential decoding means that a decoder outputs decoding results in parallel based on other structures (such as a Tanner graph (Tanner graph) and a Trellis graph (Trellis graph)) of the polar code.

For sequential decoding, primary polar code decoding algorithms include: successive cancellation (successive cancellation, SC) decoding, successive cancellation list (successive cancellation list, SCL) decoding, successive cancellation stack (successive cancellation stack, SCS) decoding, cyclic redundancy check (cyclic redundancy check, CRC)-aided successive cancellation list (CRC-aided successive cancellation list, CA-SCL) decoding, and the like. For non-sequential decoding, primary polar code decoding algorithms include belief propagation (belief propagation, BP) decoding and the like.

Sequential decoding is mainly used for the polar code, where decoding performance of SCL decoding is greatly improved compared with that of SC decoding, and through CRC check-aided CA-SCL decoding, performance of the polar code can be better than that of a low-density parity-check (low-density parity-check, LDPC) code and a Turbo code. Therefore, SCL decoding and CA-SCL decoding are mainly used in communication systems.

Based on the foregoing descriptions of the polar code, before the polar code is encoded, an information bit needs to be placed at a corresponding information bit position. When a polar code used for hybrid automatic repeat request (hybrid automatic repeat request, HARQ) transmission is constructed, a bit mapping process may be specially designed, to reduce decoding complexity and improve decoding performance.

During the HARQ transmission, a forward error correction (forward error correction, FEC) code and an automatic repeat request (automatic repeat request, ARQ) method may be jointly used, to significantly improve spectral efficiency. A specific procedure may include the following steps.

Step 1: A transmitter device sends an encoded bit sequence with a high code rate for initial transmission.

Step 2: A receiver device receives the symbol sequence, and attempts to decode the symbol sequence.

If the receiver device successfully decodes the symbol sequence, the receiver device may feed back an acknowledgement (acknowledgement, ACK) frame to the transmitter device, and the transmitter device may stop sending based on the acknowledgement frame.

If the receiver device fails to decode the symbol sequence, the receiver device may buffer the received symbol sequence, and feed back a negative acknowledgement (negative acknowledgement, NACK) frame to the transmitter device, or may not feed back a negative acknowledgement frame to the transmitter device. The transmitter device may continue to send an encoded bit sequence when receiving the negative acknowledgement frame or receiving no acknowledgement frame within specific duration. The receiver device may simultaneously decode the two received sequences.

For the HARQ transmission, sending can be stopped when intermediate decoding succeeds, so that a system throughput can be increased. To be specific, if the initial transmission succeeds, retransmission is not required, so that spectrum resources can be saved and spectral efficiency can be improved. If the initial transmission fails, the receiver device may simultaneously decode the two received sequences, so that error correction performance of a long code can still be achieved.

For example, FIG. 2 shows a polar code-based IR-HARQ framework. The framework may include an initial transmission sequence (or may be referred to as a U code) with a length of 8 and a retransmission sequence (or may be referred to as a V code) with a length of 8. The initial transmission sequence and the retransmission sequence may be combined into an encoded bit sequence with a length of 16. In the initial transmission sequence, a position of a bit filled with a graph 1 and a position of a bit filled with a graph 2 are positions of information bits. In the retransmission sequence, a position of a bit filled with a graph 3 is a position of an information bit. There is a corresponding check relationship between the position of the bit filled with the graph 3 and the position of the bit filled with the graph 1. In other words, a same information bit is placed at the position of the bit filled with the graph 3 and the mapped position of the bit filled with the graph 1.

Based on the polar code described in FIG. 2, the receiver device may decode the initial transmission sequence independently. The position of the bit filled with the graph 1 and the position of the bit filled with the graph 2 are positions of information bits. If decoding succeeds, the transmitter device may not need to continue to send an encoded bit sequence. If decoding fails, the receiver device may jointly decode the initial transmission sequence and the retransmission sequence, that is, may decode a polar code with a length of 16 and that is obtained by combining the initial transmission sequence and the retransmission sequence. The position of the bit filled with the graph 2 and the position of the bit filled with the graph 3 are positions of information bits. When the position of the bit filled with the graph 1 is decoded, a decoding result has been obtained by decoding the position that is of the bit filled with the graph 3 and that is the same as the position of the bit filled with the graph 1. The position of the bit filled with the graph 1 becomes a known value, and may be understood as a position of a dynamic frozen bit.

Based on the foregoing bit mapping relationship, it can be learned that in the polar code-based IR-HARQ framework, a corresponding check relationship needs to be formed between a part of information bits in the initial transmission sequence and a part of information bits in the retransmission sequence, or a part of information bits needs to be mapped to both the initial transmission sequence and the retransmission sequence, to ensure that the corresponding information bit is always carried at a highest-reliability position regardless of whether the initial transmission sequence is decoded independently or the initial transmission sequence and the retransmission sequence are decoded jointly, thereby improving decoding performance.

In addition, when a HARQ transmission mechanism is implemented in the communication system, retransmission resources are determined through system scheduling, and there may be a small or large quantity of retransmission resources. Therefore, preferably, coding supports rateless (Rateless) transmission. To be specific, encoding can be completed in advance, a quantity of codeword bits to be transmitted is determined based on a quantity of retransmission resources, and then a corresponding quantity of codeword bits are extracted from encoding for transmission. In other words, for "Rateless", a code rate is not determined in advance, but the code rate is determined after resources are given.

Rateless transmission requires that performance is always close to optimal performance regardless of the quantity of codeword bits to be sent. For the polar code, the information bit needs to be always on a high-reliability channel regardless of the quantity of codeword bits to be sent.

However, as the "codeword bits" increase, reliability of subchannels and an order of the subchannels change, and it is generally difficult for the polar code design to meet the foregoing requirement. As a result, positions of some bits may need to be set to positions of information bits in a case of a long retransmission length, and need to be set to positions of frozen bits in a case of a short retransmission length. Regardless of which retransmission length is used to construct the polar code, transmission performance in a case of another retransmission length is affected.

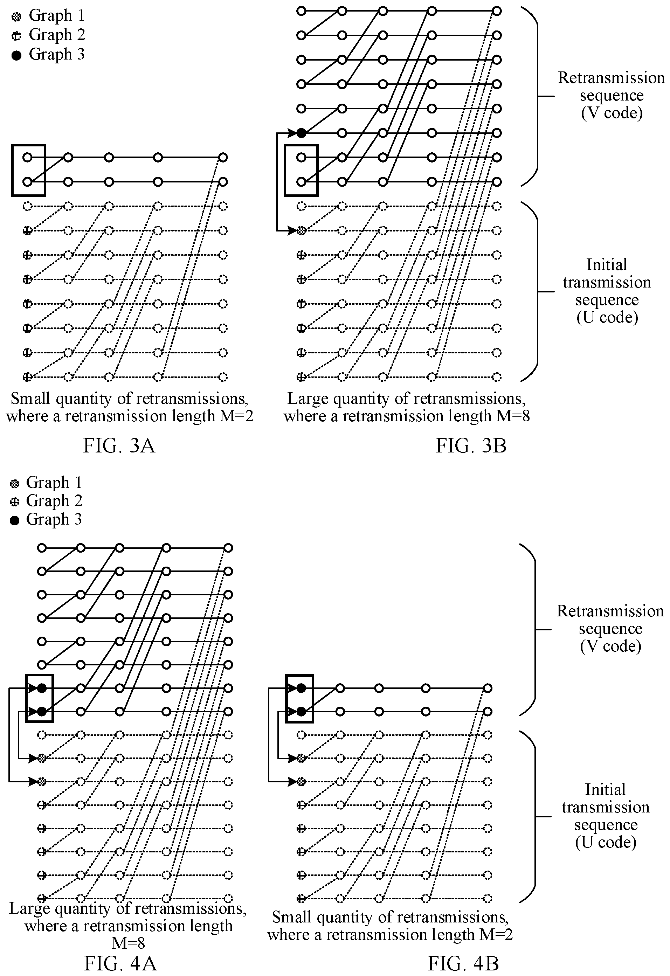

For example, as shown in FIG. 3A, if a mapping relationship is constructed based on a retransmission length M=2, a position of an 8^{th} bit and a position of a 9^{th} bit in a black box are configured as positions of frozen bits due to insufficient capacity. However, as shown in FIG. 3B, when a retransmission length M=8, it is equivalent to wasting a high-reliability subchannel, causing performance deterioration. As shown in FIG. 4A, if a mapping relationship is constructed based on a retransmission length M=8, a position of an 8^{th} bit and a position of a 9^{th} bit in a black box are configured as positions of information bits because the position of the 8^{th} bit and the position of the 9^{th} bit are high-reliability subchannels. However, as shown in FIG. 4B, when a retransmission length M=2, it is equivalent to placing information bits at extremely unreliable positions, causing a system bad point. Therefore, regardless of which retransmission length is used to construct the polar code, transmission performance in a case of another retransmission length is affected.

Based on this, it is proposed that sub-block-level interleaving may be performed on the retransmission sequence, to send a low-bit-rate sub-block in advance through interleaving, so that performance in a case of a small quantity of retransmissions is improved without sacrificing performance in a case of a large quantity of retransmissions.

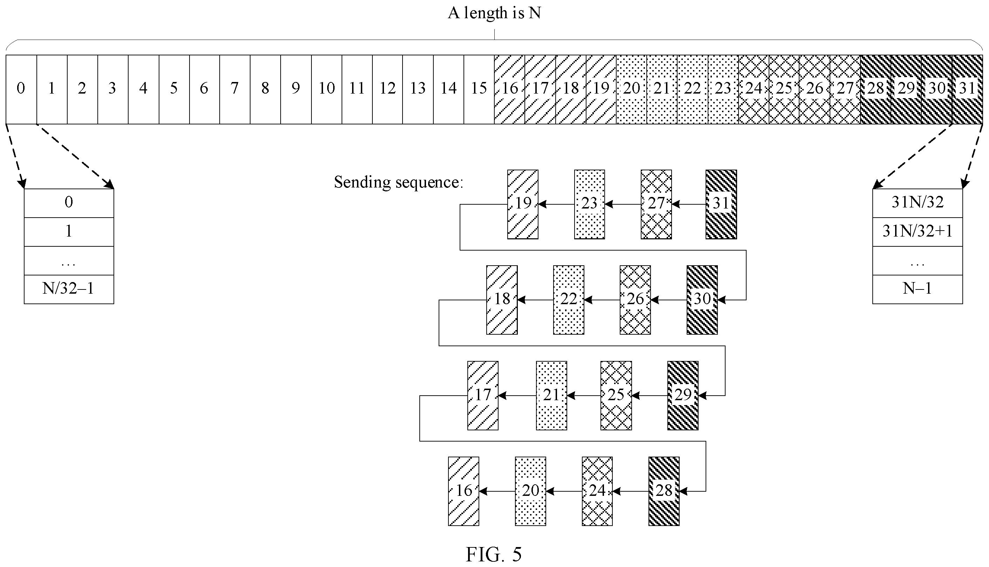

For example, as shown in FIG. 5, the transmitter device may divide a retransmission sequence with a length of N into 32 sub-blocks (including a sub-block 0, a sub-block 1, a sub-block 2, ..., a sub-block 30, and a sub-block 31), where a length of each sub-block is N/32, and perform sub-block interleaving on the retransmission sequence before sending, to send low-bit-rate sub-blocks in advance through interleaving, for example, sequentially send the sub-block 31, the sub-block 27, the sub-block 23, the sub-block 19, the sub-block 30, the sub-block 26, the sub-block 22, the sub-block 18, the sub-block 29, the sub-block 25, the sub-block 21, the sub-block 17, the sub-block 28, the sub-block 24, the sub-block 20, and the sub-block 16. Therefore, performance in a case of a small quantity of retransmissions is improved without sacrificing performance in a case of a large quantity of retransmissions.

To further improve flexibility of the polar code, an embodiment of this application provides a communication method. In the method, a transmitter device may perform polar encoding on an information bit sequence with a length of K to obtain a first sequence with a length of M₀, where K is less than or equal to M₀; and when x^{th} data retransmission is performed, send Ex bits in the first sequence, where x is a positive integer, and one or more bits among the Ex bits are bits repeated one or more times among bits from initial data transmission to the x^{th} data retransmission.

In this embodiment of this application, when the transmitter device performs the x^{th} data retransmission, the sent Ex bits may include the bits repeated one or more times among the bits included in the initial data transmission to the x^{th} data retransmission. Therefore, through local retransmission, decoding performance of a polar code used for HARQ transmission is improved, and performance stability and flexibility of the polar code are improved.

The following describes implementations of embodiments of this application in detail with reference to accompanying drawings in this specification.

The communication method provided in embodiments of this application may be applied to any communication system. The communication system may be a 3GPP communication system, for example, a long term evolution (long term evolution, LTE) system, or may be a fifth generation (fifth generation, 5G) mobile communication system, an LTE and 5G hybrid networking system, an NR system, an NR vehicle to everything (vehicle to everything, V2X) system, a device-to-device (device-to-device, D2D) communication system, a machine to machine (machine to machine, M2M) communication system, internet of things (internet of things, IoT), narrowband internet of things (narrowband internet of things, NB-IoT), global system for mobile communications (global system for mobile communications, GSM), enhanced data rate for GSM evolution (enhanced data rate for GSM evolution, EDGE), wideband code division multiple access (wideband code division multiple access, WCDMA), code division multiple access 2000 (code division multiple access, CDMA2000), time division-synchronization code division multiple access (time division-synchronization code division multiple access, TD-SCDMA), enhanced mobile broadband (enhanced mobile broadband, eMBB), ultra-reliable and low-latency communication (ultra-reliable and low-latency communication, URLLC), enhanced machine-type communication (enhanced machine-type communication, eMTC), and various types of next-generation communication systems, such as a sixth generation (sixth generation, 6G) mobile communication system, or may be a non-terrestrial communication network (non-terrestrial network, NTN) system (for example, a satellite communication system), or a non-3GPP communication system. This is not limited.

The communication method provided in embodiments of this application may be applied to various communication scenarios. For example, the communication method may be applied to one or more of the following communication scenarios: control channel coding, data channel coding, and the like. This is not limited.

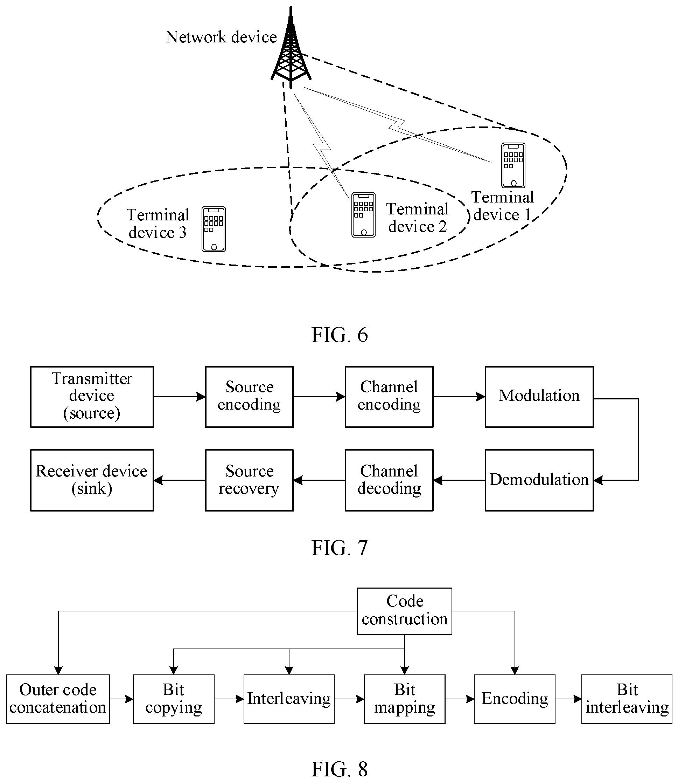

The following uses FIG. 6 as an example to describe the communication system provided in embodiments of this application.

FIG. 6 is a diagram of a communication system according to an embodiment of this application. As shown in FIG. 6, the communication system may include at least one terminal device and at least one network device.

In FIG. 6, the terminal device may be located in beam/cell coverage of the network device, and the network device may provide a communication service for the terminal device. For example, the network device may encode downlink data through channel encoding, and transmit the downlink data to the terminal device through an air interface after constellation modulation (that is, the network device is a transmitter device, and the terminal device is a receiver device). Alternatively, the terminal device may encode uplink data through channel encoding, and send the uplink data to the network device through an air interface after constellation modulation (that is, the terminal device is a transmitter device, and the network device is a receiver device). It may be understood that, when the network device communicates with the network device, or the terminal device communicates with the terminal device, communication may be performed through channel encoding. In other words, both the transmitter device and the receiver device may be network devices, or may be terminal devices. This is not limited.

The terminal device in FIG. 6 may be a device having a wireless transceiver function or a chip or a chip system that can be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device in FIG. 6 may be a mobile phone (mobile phone), a tablet computer, or a computer having a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a processing device connected to a wireless modem, a vehicle-mounted device, a wearable device, a terminal device in the internet of things, household appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a terminal device in a future network, a terminal device in a future evolved public land mobile network (public land mobile network, PLMN), or the like. This is not limited.

The network device in FIG. 6 may be any device that is deployed in an access network and that can perform wireless communication with a terminal device, or may be a chip or a chip system that can be disposed in the device, or may be a logical node or a logical module or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the network device may include one or more access network (access network, AN) or radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

For another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

For still another example, the network device may alternatively be a device including a central unit (central unit, CU) node, including a distributed unit (distributed unit, DU) node, or including a CU node and a DU node. For example, the network device may be divided into a CU and a DU from a perspective of logical functions. Some protocol layer functions are centrally controlled by the CU, and a part or all of the remaining protocol layer functions are distributed in the DU, and the CU centrally controls the DU. Further, the central unit CU may be further divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

Based on the foregoing descriptions of the terminal device and the network device, optionally, the communication method provided in embodiments of this application may be implemented by the terminal device or the network device, or may be implemented by a component of the terminal device or the network device, for example, implemented by an application-specific integrated circuit (application-specific integrated circuit, ASIC), a field programmable gate array (field programmable gate array, FPGA), or software (for example, program code in a memory) deployed in the terminal device or the network device. This is not limited.

Optionally, in embodiments of this application, the transmitter device (or referred to as a source) and the receiver device (or referred to as a sink) may perform encoding and decoding by using a procedure shown in FIG. 7.

The transmitter device may perform source encoding on bits generated by the transmitter device to obtain a source bit stream, perform channel encoding on the source bit stream through channel encoding, perform modulation, and then send a modulation symbol to the receiver device through a noisy channel. When receiving the modulation symbol through the noisy channel, the receiver device may perform demodulation, perform channel decoding to restore the source bit stream, and then perform source recovery to obtain a decoding result.

Optionally, when performing polar code encoding, the transmitter device may perform encoding based on a polar code encoding chain shown in FIG. 8. The polar code encoding chain may include processes such as code construction, outer code concatenation, bit copying, interleaving, bit mapping, encoding, and bit interleaving.

The code construction may be constructing an information bit position set, a frozen bit position set, and/or a check relationship between information bits. The outer code concatenation is used to precode, for example, perform CRC on, information encoding before the polar code. The bit copying may be used to copy a part of information bits. The interleaving implements interleaving on an encoded bit sequence. The bit mapping may be used to map an information bit to a corresponding information bit position. The encoding is used to perform polar encoding on a bit mapped sequence to obtain an encoded bit sequence of the polar code. The bit interleaving is used to interleave the polar code.

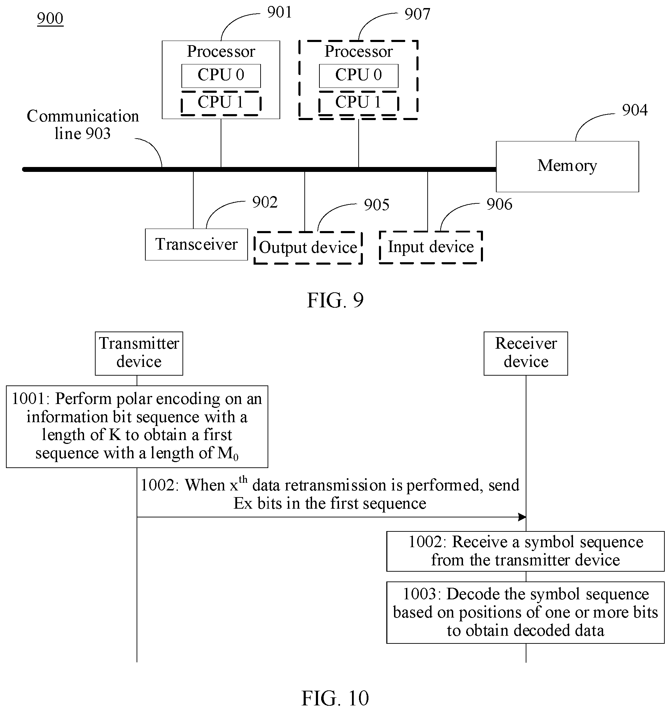

During specific implementation, as shown in FIG. 6, for example, each terminal device and each network device may use a composition structure shown in FIG. 9, or include components shown in FIG. 9. FIG. 9 is a diagram of composition of a communication apparatus 900 according to an embodiment of this application. The communication apparatus 900 may be a terminal device, or a chip or a system on chip in the terminal device; or may be a network device, or a chip or a system on chip in the network device. As shown in FIG. 9, the communication apparatus 900 includes a processor 901, a transceiver 902, and a communication line 903.

Further, the communication apparatus 900 may further include a memory 904. The processor 901, the memory 904, and the transceiver 902 may be connected through the communication line 903.

The processor 901 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The communication line 903 is used to transmit information between components included in the communication apparatus 900.

The memory 904 is configured to store instructions. The instruction may be a computer program.

The memory 904 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), magnetic disk storage medium or another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located in the communication apparatus 900, or may be located outside the communication apparatus 900. This is not limited. The processor 901 is configured to execute the instructions stored in the memory 904, to implement a communication method provided in the following embodiments of this application.

For example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device like a keyboard, a mouse, a microphone, or a joystick, and the output device 905 is a device like a display or a speaker (speaker).

It should be noted that the communication apparatus 900 may be a desktop computer, a portable computer, a network server, a mobile phone, a tablet computer, a wireless terminal, an embedded device, a chip system, or a device having a similar structure in FIG. 9. In addition, the composition structure shown in FIG. 9 does not constitute a limitation on the communication apparatus. In addition to the components shown in FIG. 9, the communication apparatus may include more or fewer components than those shown in the figure, or combine some components, or have different component arrangements.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 6, the following describes a communication method provided in an embodiment of this application with reference to FIG. 10. The transmitter device may be any terminal device or network device in the communication system shown in FIG. 6, and the receiver device may also be any terminal device or network device in the communication system shown in FIG. 6. The transmitter device or the receiver device described in the following embodiment may have the components shown in FIG. 9.

FIG. 10 is a flowchart of a communication method according to an embodiment of this application. As shown in FIG. 10, the method may include the following steps.

Step 1001: A transmitter device performs polar encoding on an information bit sequence with a length of K to obtain a first sequence with a length of M₀.

K is less than or equal to M₀.

The information bit sequence may include an information bit, a cyclic redundancy check (cyclic redundancy check, CRC) bit, and a parity-check (parity-check, PC) bit. K may be a sum of a quantity of information bits, a quantity of CRC bits, and a quantity of parity-check bits that are included in the information bit sequence.

Optionally, the transmitter device may perform polar encoding on the information bit sequence with a length of K to obtain a fourth sequence with a length of N₀, and determine the first sequence with a length of M₀ based on the fourth sequence.

The fourth sequence may include a fifth sequence with a length of N₁ and a sixth sequence with a length of (N₀-N₁).

For example, the transmitter device may determine a specific value of N₁ in the following manner: calculating, based on the length K of the information bit sequence and a length E after rate matching (or may be referred to as a sending length E), N₂ as a minimum integer power of 2 that is greater than or equal to E (for example, if E is equal to 252, N₂ is equal to 256; or if E is equal to 5, N₂ is equal to 8). Rₘᵢₙ is defined to be equal to 1/8, indicating a supported minimum code rate, nₘᵢₙ is equal to 5, and nₘₐₓ is equal to 10 (uplink)/5 (downlink). If K/E is less than 9/16 and E is less than (1+1/8)*N₂/2, n₁ is calculated to be equal to log₂(*N*₂)-1; otherwise, n₁ is calculated to be equal to log₂(*N*₂); and n₂ is calculated to be equal to $\left⌈{log}_{2}\left(K/{R}_{min}\right)\right⌉$, n is calculated to be equal to max{min{n₁, n₂, nₘₐₓ}, nₘᵢₙ}, and N₁ is determined to be equal to 2ⁿ based on n.

For example, N₁ may be a minimum integer power of 2 that is greater than or equal to E.

For example, N₀ may be equal to 2N₁.

For example, when performing polar encoding on the information bit sequence, the transmitter device may map a part of information bits (for example, A information bits) in the information bit sequence with a length of K to both positions of A first bits in the fifth sequence and positions of A second bits in the sixth sequence. In other words, there is a corresponding check relationship between the positions of the A first bits in the fifth sequence and the positions of the A second bits in the sixth sequence, so that decoding performance can be improved.

The positions of the A first bits in the fifth sequence may be positions of A first bits among K most reliable first bits in the fifth sequence. The positions of the A second bits in the sixth sequence may be positions of A second bits in the sixth sequence among K most reliable second bits in the fourth sequence.

For example, the positions of the A first bits may be positions of last A bits in an order of the positions of the K first bits sorted in descending order of reliability.

Optionally, (N₁-K) low-reliability positions in the fifth sequence may be used as positions of frozen bits.

Based on the foregoing descriptions of the fourth sequence, the transmitter device may determine the first sequence based on the fourth sequence with reference to any one of the following possible designs.

In a first possible design, the transmitter device may determine the fourth sequence as the first sequence. In other words, the first sequence with a length of M₀ is equal to the fourth sequence with a length of N₀.

Optionally, the first sequence may include a second sequence with a length of M₁ and a third sequence with a length of (M₀-M₁), the second sequence may be the fifth sequence in the fourth sequence, and the third sequence may be the sixth sequence in the fourth sequence.

In a second possible design, the transmitter device may perform rate matching on the fourth sequence, and determine a sequence after the rate matching as the first sequence.

A rate matching manner may be any one of the following: repetition (repetition), puncturing (puncturing), and shortening (shortening).

For example, when the rate matching manner is shortening, a shortened bit in the fourth sequence may be removed to obtain the first sequence.

The shortened bit in the fourth sequence may be fixed to 0, and a position of the shortened bit is removed to obtain the first sequence. In this case, M₀ is less than N₀.

For another example, when the rate matching manner is puncturing or repetition, the first sequence is the fourth sequence.

Optionally, the transmitter device may determine a corresponding rate matching manner based on a code rate R=K/E and the length E after rate matching.

For example, N₂ is calculated as a minimum integer power of 2 that is greater than or equal to E. When K/E is less than 9/16 and E/N₂ is less than 1+1/8, the transmitter device may determine that the rate matching manner is repetition (repetition).

For example, N₂ is calculated as a minimum integer power of 2 that is greater than or equal to E. When K/E is less than or equal to 7/16, the transmitter device may determine that the rate matching manner is puncturing (puncturing); otherwise, the transmitter device determines that the rate matching manner is shortening (shortening).

Optionally, the first sequence may include a second sequence with a length of M₁ and a third sequence with a length of (M₀-M₁). The second sequence may be a sequence obtained by performing rate matching on the fifth sequence in the fourth sequence, and the third sequence may be a sequence obtained by performing rate matching on the sixth sequence in the fourth sequence.

In a third possible design, the transmitter device may alternatively interleave the fourth sequence, and determine an interleaved sequence as the first sequence.

The transmitter device may interleave the fourth sequence based on a plurality of interleaving patterns to obtain the first sequence. Different interleaving patterns correspond to different bits in the fourth sequence.

Optionally, the interleaving pattern may be one or more of the following: a bit interleaving pattern, a sub-block interleaving pattern, a random interleaving pattern, a triangular interleaving pattern, or a row-column interleaving pattern.

When the interleaving pattern is a bit interleaving pattern, the transmitter device may interleave, at a granularity of a bit based on the interleaving pattern, bits corresponding to the interleaving pattern. Alternatively, when the interleaving pattern is a sub-block interleaving pattern, the transmitter device may interleave, at a granularity of a sub-block based on the sub-block interleaving pattern, bits corresponding to the interleaving pattern, to be specific, may divide the bits corresponding to the interleaving pattern into a plurality of sub-blocks, and interleave the plurality of sub-blocks based on the interleaving pattern. Each sub-block may include one or more bits.

For example, the fourth sequence includes the fifth sequence and the sixth sequence. The transmitter device may interleave the fifth sequence in the fourth sequence based on a first interleaving pattern, and interleave the sixth sequence in the fourth sequence based on a second interleaving pattern, to obtain the first sequence.

The first interleaving pattern and the second interleaving pattern may be the same, or may be different. This is not limited.

For example, both the first interleaving pattern and the second interleaving pattern are sub-block interleaving patterns. The first interleaving pattern and the second interleaving pattern may be a same sub-block interleaving pattern, or may be different sub-block interleaving patterns. A sub-block size of the first interleaving pattern and a sub-block size of the second interleaving pattern may be the same, or may be different. This is not limited.

For example, the first interleaving pattern may be [0 1 2 4 3 5 6 7 8 16 9 17 10 18 11 19 12 20 13 21 14 22 15 23 24 25 26 28 27 29 30 31], and the second interleaving pattern may be [0 4 8 12 1 5 9 13 2 6 10 14 3 7 11 15 16 20 24 28 17 21 25 29 18 22 26 30 19 23 27 31].

It may be understood that the interleaving pattern may be defined starting from a bit 0, or may be defined starting from a bit 1, in other words, 0, 1, 2, ..., and 31 described above may be respectively replaced with 1, 2, ..., and 32. This is not limited.

Optionally, the first sequence may include a second sequence with a length of M₁ and a third sequence with a length of (M₀-M₁). The second sequence may be a sequence obtained by interleaving the fifth sequence in the fourth sequence, and the third sequence may be a sequence obtained by interleaving the sixth sequence in the fourth sequence.

Step 1002: When x^{th} data retransmission is performed, the transmitter device sends Ex bits in the first sequence, and correspondingly, the receiver device receives the symbol sequence from the transmitter device.

When modulation symbols corresponding to the Ex bits in the first sequence sent by the transmitter device to the receiver device are transmitted through a channel, the modulation symbols may be affected by interference such as noise, and the symbol sequence received by the receiver device is Ex symbols affected by interference such as noise.

x is a positive integer, and one or more bits among the Ex bits are bits repeated one or more times among bits from initial data transmission to the x^{th} data retransmission. Alternatively, one or more bits among the Ex bits are repeated one or more times from initial data transmission to the x^{th} data retransmission. The initial data transmission is initial transmission corresponding to data retransmission.

Optionally, the transmitter device may place the first sequence in a circular buffer (circular buffer) for sending.

The transmitter device may place the first sequence in the circular buffer in a counterclockwise order (for example, sequentially place a 0^{th} bit to a last bit in the third sequence and a 0^{th} bit to a last bit in the second sequence in the circular buffer in a counterclockwise order). The bits in the circular buffer are sent in a clockwise order (for example, when data retransmission is performed, sending starts from the last bit in the second sequence in a clockwise order; when 1^{st} data retransmission is performed, sending starts from an end position of the initial data transmission; and when the x^{th} data retransmission is performed, sending starts from an end position of (x-1)^{th} data retransmission). Alternatively, the transmitter device may place the first sequence in the circular buffer in a clockwise order, and send the bits in the circular buffer in a counterclockwise order. This is not limited.

It may be understood that, the foregoing process only indicates positions of the bits read from the circular buffer, and does not limit a sequence of reading the bits.

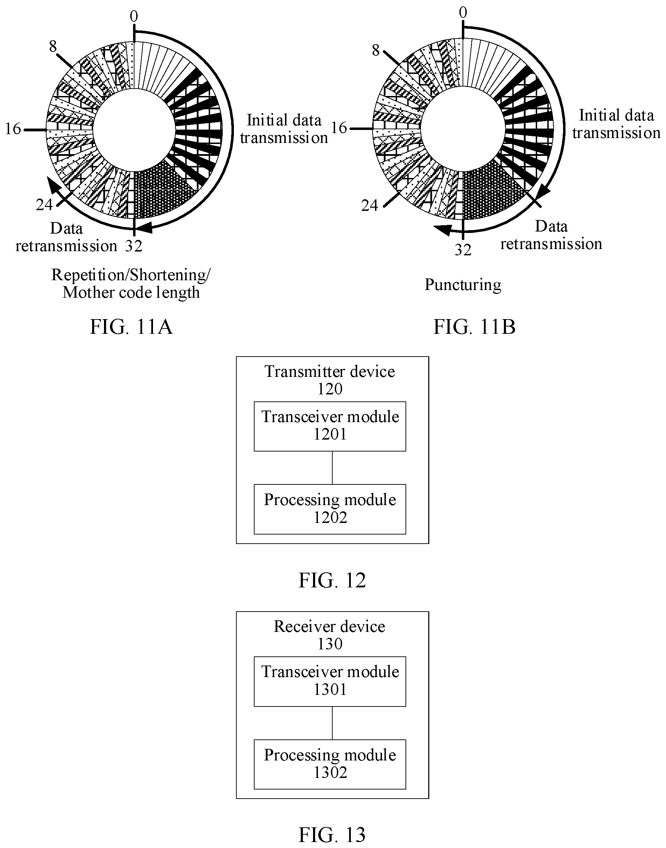

For example, the first sequence includes a second sequence with a length of 32 and a third sequence with a length of 32. As shown in FIG. 11A or FIG. 11B, the transmitter device may place the first sequence in the circular buffer in a counterclockwise order, to be specific, a left half part sequentially corresponds to a 0^{th} bit to a 31^{st} bit in the third sequence from top to bottom, and a right half part sequentially corresponds to a 0^{th} bit to a 31^{st} bit in the second sequence from bottom to top. When performing initial data transmission, the transmitter device may start sending from the 31^{st} bit in the second sequence in a clockwise order; when performing 1^{st} data retransmission, the transmitter device starts sending from an end position of the initial data transmission; and when performing x^{th} data retransmission, the transmitter device starts sending from an end position of (x-1)^{th} data retransmission.

Optionally, as shown in FIG. 11A, for the initial data transmission, if the rate matching manner is repetition or shortening, the transmitter device may send all bits in the second sequence, or if a length of the initial transmission is a mother code length, the transmitter device may send all bits in the second sequence; or as shown in FIG. 11B, if the rate matching manner is puncturing, the transmitter device may send a part of bits in the second sequence.

For example, if the rate matching manner is repetition or shortening, as shown in FIG. 11A, when performing the initial data transmission, the transmitter device may send the 32 bits in the second sequence in a clockwise order; and when performing the 1^{st} data retransmission, the transmitter device starts sending from the end position of the initial data transmission, to be specific, may start sending from the 31^{st} bit in the third sequence. Alternatively, if the rate matching manner is puncturing, as shown FIG. 11B, when performing the initial data transmission, the transmitter device may send a part of the 32 bits in the second sequence in a clockwise order; and when performing the 1^{st} data retransmission, the transmitter device may start sending from the end position of the initial data transmission.

Based on the foregoing descriptions, for example, when performing the x^{th} data retransmission, the transmitter device may send bits at a start position to a first position Bx of the x^{th} data retransmission and the one or more bits among the Ex bits. Alternatively, the Ex bits in the first sequence include bits at a start position to a first position Bx of the x^{th} data retransmission and the one or more bits among the Ex bits.

The first position Bx is a predefined first position.

For example, the first position Bx may be a predefined first position immediately preceding an end position of the x^{th} data retransmission, and the end position of the x^{th} data retransmission is determined based on the start position of the x^{th} data retransmission and a sending length Ex of the x^{th} data retransmission.

Optionally, the first sequence may include one or more predefined first positions.

Optionally, the first position is a position of a bit that can be successfully decoded in the first sequence.

It may be understood that the first sequence may include a plurality of positions of bits that can be successfully decoded, and the first position included in the first sequence may be a subset or an entire set of the positions of the bits that can be successfully decoded in the first sequence. This is not limited.

Optionally, a 1^{st} first position in the first sequence may be a position used to distinguish between the second sequence and the third sequence, and other first positions in the first sequence may be used to divide the third sequence into 4, 8, 16, 32, or another quantity of equal segments. This is not limited.

In a first possible design, the predefined first position includes a position of one or more of the following bits: a position of an (M₀/2)^{th} bit, a position of a (3M₀/8)^{th} bit, a position of an (M₀/4)^{th} bit, a position of an (M₀/8)^{th} bit, and a position of a 0^{th} bit.

In a second possible design, the predefined first position includes a position of one or more of the following bits: a position of an (M₀/2)^{th} bit, a position of a (7M₀/16)^{th} bit, a position of a (3M₀/8)^{th} bit, a position of a (5M₀/16)^{th} bit, a position of an (M₀/4)^{th} bit, a position of a (3M₀/16)^{th} bit, a position of an (M₀/8)^{th} bit, a position of an (M₀/16)^{th} bit, and a position of a 0^{th} bit.

In a third possible design, the predefined first position includes a position of one or more of the following bits: a position of an (M₀/2)^{th} bit, a position of a (15M₀/32)^{th} bit, a position of a (7M₀/16)^{th} bit, a position of a (13M₀/32)^{th} bit, a position of a (3M₀/8)^{th} bit, a position of an (11M₀/32)^{th} bit, a position of a (5M₀/16)^{th} bit, a position of a (9M₀/32)^{th} bit, a position of an (M₀/4)^{th} bit, a position of a (7M₀/32)^{th} bit, a position of a (3M₀/16)^{th} bit, a position of a (5M₀/32)^{th} bit, a position of an (M₀/8)^{th} bit, a position of a (3M₀/32)^{th} bit, a position of an (M₀/16)^{th} bit, a position of an (M₀/32)^{th} bit, and a position of a 0^{th} bit.

In the foregoing three possible designs, the first possible design is easy to implement, the second possible design can improve system flexibility, and the third possible design can further improve system flexibility.

Based on the foregoing descriptions of the Ex bits in the first sequence, the transmitter device may determine, in one or more of the following manners, one or more bits, among the Ex bits in the first sequence, repeated one or more times from the initial data transmission to the x^{th} data retransmission.

Manner 1: A start bit of the one or more bits among the Ex bits in the first sequence is a bit at the start position of the x^{th} data retransmission.

The transmitter device may determine, based on the start position of the x^{th} data retransmission, one or more bits before the start position as the one or more bits among the Ex bits; or may determine one or more bits after the start position as the one or more bits among the Ex bits.

Optionally, the one or more bits among the Ex bits may be consecutive bits, or may be discrete bits. This is not limited.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and two bits at the position of the 31^{st} bit and the position of the 30^{th} bit (where the two bits are the one or more bits among the Ex bits).

Alternatively, the transmitter device may send eight bits at the position of the 31^{st} bit to the position of the 24^{th} bit and two bits at the position of the 32^{nd} bit and the position of the 31^{st} bit (where the two bits are the one or more bits among the Ex bits).

Alternatively, the transmitter device may send eight bits at the position of the 31^{st} bit to the position of the 24^{th} bit and two bits at the position of the 31^{st} bit and the position of the 27^{th} bit (where the two bits are the one or more bits among the Ex bits).

Alternatively, the transmitter device may send eight bits at the position of the 31^{st} bit to the position of the 24^{th} bit and two bits at the position of the 31^{st} bit and the position of the 48^{th} bit (where the two bits are the one or more bits among the Ex bits).

Manner 2: A start bit of the one or more bits among the Ex bits is a bit at a start position of the (x-1)^{th} data retransmission.

The transmitter device may determine, based on the start position of the (x-1)^{th} data retransmission, one or more bits before the start position as the one or more bits among the Ex bits; or may determine one or more bits after the start position as the one or more bits among the Ex bits.

Optionally, the one or more bits among the Ex bits may be consecutive bits, or may be discrete bits. This is not limited.

For example, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 2, a start position of 1^{st} data retransmission is the position of the 31^{st} bit, a start position of 2^{nd} data retransmission is the position of the 23^{rd} bit, and a sending length of the 2^{nd} data retransmission is 10. In this case, the transmitter device may determine an end position of the 2^{nd} data retransmission, to be specific, the position of the 14^{th} bit, based on a start position (to be specific, the 23^{rd} bit) of the 2^{nd} data retransmission and the sending length of the 2^{nd} data retransmission, to determine that a first position Bx=B₂ corresponding to the 2^{nd} data retransmission is the position of the 16^{th} bit. The transmitter device may send eight bits at the position of the 23^{rd} bit to the position of the 16^{th} bit and two bits at the position of the 23^{rd} bit and the position of the 22^{nd} bit (where the two bits are the one or more bits among the Ex bits).

Alternatively, the transmitter device may send eight bits at the position of the 23^{rd} bit to the position of the 16^{th} bit and two bits at the position of the 24^{th} bit and the position of the 23^{rd} bit (where the two bits are the one or more bits among the Ex bits).

Alternatively, the transmitter device may send eight bits at the position of the 23^{rd} bit to the position of the 16^{th} bit and two bits at the position of the 48^{th} bit and the position of the 23^{rd} bit (where the two bits are the one or more bits among the Ex bits).

Alternatively, the transmitter device may send eight bits at the position of the 23^{rd} bit to the position of the 16^{th} bit and two bits at the position of the 23^{rd} bit and the position of the 20^{th} bit (where the two bits are the one or more bits among the Ex bits).

It may be understood that, for the 1^{st} data retransmission, a start position of one or more bits among Ex=E₁ bits may be a bit at a start position of the initial data transmission.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and two bits at the position of the 63^{rd} bit and the position of the 62^{nd} bit (where the two bits are the one or more bits among the Ex bits).

Alternatively, the transmitter device may send eight bits at the position of the 31^{st} bit to the position of the 24^{th} bit and two bits at the position of the 63^{rd} bit and the position of the 60^{th} bit (where the two bits are the one or more bits among the Ex bits).

Manner 3: A start bit of the one or more bits among the Ex bits is a bit at a start position of the initial data transmission.

The transmitter device may determine, based on the start position of the initial data transmission, one or more bits after the start position as the one or more bits among the Ex bits.

Optionally, the one or more bits among the Ex bits may be consecutive bits, or may be discrete bits. This is not limited.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and two bits at the position of the 63^{rd} bit and the position of the 62^{nd} bit (where the two bits are the one or more bits among the Ex bits).

Alternatively, the transmitter device may send eight bits at the position of the 31^{st} bit to the position of the 24^{th} bit and two bits at the position of the 63^{rd} bit and the position of the 60^{th} bit (where the two bits are the one or more bits among the Ex bits).

For another example, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 2, a start position of 2^{nd} data retransmission is the position of the 23^{rd} bit, and a sending length of the 2^{nd} data retransmission is 10. In this case, the transmitter device may determine an end position of the 2^{nd} data retransmission, to be specific, the position of the 14^{th} bit, based on a start position (to be specific, the 23^{rd} bit) of the 2^{nd} data retransmission and the sending length of the 2^{nd} data retransmission, to determine that a first position Bx=B₂ corresponding to the 2^{nd} data retransmission is the position of the 16^{th} bit. The transmitter device may send eight bits at the position of the 23^{rd} bit to the position of the 16^{th} bit and two bits at the position of the 63^{rd} bit and the position of the 62^{nd} bit (where the two bits are the one or more bits among the Ex bits).

Alternatively, the transmitter device may send eight bits at the position of the 23^{rd} bit to the position of the 16^{th} bit and two bits at the position of the 63^{rd} bit and the position of the 58^{th} bit (where the two bits are the one or more bits among the Ex bits).

Manner 4: A start bit of the one or more bits among the Ex bits is a bit at a predefined position.

The transmitter device may determine, based on the predefined position, one or more bits after the predefined position as the one or more bits among the Ex bits; or determine one or more bits before the predefined position as the one or more bits among the Ex bits.

Optionally, the one or more bits among the Ex bits may be consecutive bits, or may be discrete bits. This is not limited.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, a sending length of 1^{st} data retransmission is 10, and the predefined position is the position of the 32^{nd} bit. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and two bits at the position of the 32^{nd} bit and the position of the 31^{st} bit (where the two bits are the one or more bits among the Ex bits).

Alternatively, the transmitter device may send eight bits at the position of the 31^{st} bit to the position of the 24^{th} bit and two bits at the position of the 33^{rd} bit and the position of the 32^{nd} bit (where the two bits are the one or more bits among the Ex bits).

Alternatively, the transmitter device may send eight bits at the position of the 31^{st} bit to the position of the 24^{th} bit and two bits at the position of the 32^{nd} bit and the position of the 48^{th} bit (where the two bits are the one or more bits among the Ex bits).

Alternatively, the transmitter device may send eight bits at the position of the 31^{st} bit to the position of the 24^{th} bit and two bits at the position of the 32^{nd} bit and the position of the 20^{th} bit (where the two bits are the one or more bits among the Ex bits).

Manner 5: A start bit of the one or more bits among the Ex bits is a bit at a second position before the first position Bx.

Optionally, the one or more bits among the Ex bits may be consecutive bits, or may be discrete bits. This is not limited.

When the one or more bits among the Ex bits are consecutive bits, bits at the second position to the first position Bx are the one or more bits among the Ex bits. When the one or more of the Ex bits are discrete bits, the second position may be any position before the first position Bx. This is not limited.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and two bits at the position of the 25^{th} bit and the position of the 24^{th} bit (where the two bits are the one or more bits among the Ex bits).

Alternatively, the transmitter device may send eight bits at the position of the 31^{st} bit to the position of the 24^{th} bit and two bits at the position of the 50^{th} bit and the position of the 48^{th} bit (where the two bits are the one or more bits among the Ex bits).

Manner 6: The one or more bits among the Ex bits may be any one or more bits at a start position of the initial data transmission to the first position Bx.

Optionally, the one or more bits among the Ex bits may be consecutive bits, or may be discrete bits. This is not limited.

For example, as shown in FIG. 11A, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission, to determine that a first position Bx=B₁ corresponding to the 1^{st} data retransmission is the position of the 24^{th} bit. The transmitter device may send eight bits at the position of the 31^{st} bit to the position of the 24^{th} bit and bits at any two positions among the position of the 63^{rd} bit to the position of the 24^{th} bit (where the two bits are the one or more bits among the Ex bits).

Based on the foregoing descriptions, optionally, the transmitter device may send the Ex bits in the first sequence with reference to the following first possible implementation, second possible implementation, or third possible implementation.

In the first possible implementation, when performing data retransmission, the transmitter device sends the Ex bits in the first sequence.

Different from the following second possible implementation and third possible implementation in which the transmitter device sends the Ex bits in the first sequence when a specific condition is met, in this possible implementation, the transmitter device may directly send the Ex bits in the first sequence during the data retransmission.

In the second possible implementation, the transmitter device may send the Ex bits in the first sequence when a ratio of a first quantity to a second quantity is greater than a preset code rate threshold.

The first quantity is a quantity of information bits at the end position to the first position Bx of the x^{th} data retransmission, and the second quantity is a quantity of bits at the end position to the first position Bx of the x^{th} data retransmission.

Optionally, when the ratio of the first quantity to the second quantity is less than or equal to the preset code rate threshold, the transmitter device may send Ex bits at the start position of the x^{th} data retransmission to the end position of the x^{th} data retransmission without sending the Ex bits in the first sequence.

For example, x is equal to 1, a start position of 1^{st} data retransmission is a position of a 31^{st} bit, and a sending length of the 1^{st} data retransmission is 10. When the ratio of the first quantity to the second quantity is less than or equal to the preset code rate threshold, the transmitter device may send 10 bits at the position of the 31^{st} bit to a position of a 22^{nd} bit.

In the third possible implementation, the transmitter device may send the Ex bits in the first sequence when the end position of the x^{th} data retransmission is after the second sequence and before a 1^{st} first position of the third sequence.

The end position of the x^{th} data retransmission is determined based on the start position of the x^{th} data retransmission and the sending length Ex of the x^{th} data retransmission.

For example, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 6. In this case, the transmitter device may determine an end position of the 1^{st} data retransmission, to be specific, the position of the 26^{th} bit, based on a start position (to be specific, the 31^{st} bit) of the 1^{st} data retransmission and the sending length of the 1^{st} data retransmission. The end position is after the second sequence and before the 1^{st} first position (to be specific, the position of the 24^{th} bit) of the third sequence. The transmitter device may determine, based on the end position, that a first position Bx=B₁ corresponding to the 1^{st} data retransmission is the position of the 32^{nd} bit. Because the start position of the 1^{st} data retransmission and the first position B₁ are a same position, and there is no other bit between the positions, the transmitter device may send 10 bits before the position of the 31^{st} bit (where the 10 bits are the one or more bits among the Ex bits).

Optionally, when the end position of the x^{th} data retransmission is after the 1^{st} first position of the third sequence, the transmitter device sends Ex bits at the start position of the x^{th} data retransmission to the end position of the x^{th} data retransmission without sending the Ex bits in the first sequence.

For example, in a counterclockwise order, a position in a 12 o'clock direction is a position of a 0^{th} bit, and the first sequence may include positions of 64 bits (which are sequentially the position of the 0^{th} bit, a position of a 1^{st} bit, ..., and a position of a 63^{rd} bit in a counterclockwise order). For example, the first position in the first sequence includes the position of the 32^{nd} bit, the position of the 24^{th} bit, the position of the 16^{th} bit, the position of the 8^{th} bit, and the position of the 0^{th} bit. It is assumed that x is equal to 1, and a sending length of 1^{st} data retransmission is 10. In this case, the transmitter device may determine an end position of the 1^{st} data retransmission, to be specific, the position of the 22^{nd} bit, based on a start position (to be specific, the 31^{st} bit) of the 1^{st} data retransmission and the sending length of the 1^{st} data retransmission. The end position is after the 1^{st} first position (to be specific, the position of the 24^{th} bit) of the third sequence. The transmitter device may send 10 bits at the position of the 31^{st} bit to the position of the 22^{nd} bit.

It may be understood that descriptions such as "Ex bits in the first sequence, or one or more bits among the Ex bits" in embodiments of this application specifically refer to Ex bits including bits repeated one or more times among the bits included in the initial data transmission to the x^{th} data retransmission, and are different from the "Ex bits at the start position of the x^{th} data retransmission to the end position of the x^{th} data retransmission". In other words, the "Ex bits at the start position of the x^{th} data retransmission to the end position of the x^{th} data retransmission" is not equivalent to the "Ex bits in the first sequence".

In addition, the foregoing descriptions are provided by using an example in which the first sequence includes 64 bits. It may be understood that when a length of the first sequence is greater than 64, the first sequence may be divided into 64 sub-blocks. For details, refer to the foregoing descriptions of the initial data transmission and the data retransmission based on the bit, initial data transmission and the data retransmission are performed based on the sub-block. In addition, in the foregoing descriptions, definitions are provided starting from a 0^{th} bit, or definitions are provided starting from a 1^{st} bit, in other words, 0, 1, 2, ..., and 31 described above may be respectively replaced with 1, 2, ..., and 32. This is not limited.

Optionally, an optional implementation method for local retransmission is determining a bit sequence based on bits at the start position to the first position Bx of the x^{th} data retransmission, and using the bit sequence as the one or more bits among the Ex bits for retransmission.

For example, the sending length of the x^{th} data retransmission is 10. It is assumed that a quantity of bits at the start position to the first position Bx of the x^{th} data retransmission is 8. In this case, the transmitter device may divide the bits at the start position to the first position Bx of the x^{th} data retransmission into four groups based on a bit length, then perform an exclusive OR operation to obtain a bit sequence with a length of 2, and use the bit sequence as the one or more bits among the E bits.

Optionally, after determining, according to the foregoing descriptions, the bits corresponding to the x^{th} data retransmission, the transmitter device may further perform transformation processing on the bits corresponding to the x^{th} data retransmission, and send a transformation processed bit sequence.

For example, exclusive OR processing may be performed on the bits corresponding to the x^{th} data retransmission, and an exclusive OR processed bit sequence is sent. Alternatively, the bits corresponding to the x^{th} data retransmission may be divided into a plurality of groups, exclusive OR processing is performed, and an exclusive OR processed bit sequence is sent.

Step 1003: The receiver device decodes the symbol sequence based on the positions of one or more bits to obtain decoded data.

The positions of the one or more bits are positions of bits repeated one or more times among the bits included in the initial data transmission to the x^{th} data retransmission, and x is a positive integer

Optionally, the receiver device may determine the positions of the one or more bits in a manner the same as that of the transmitter device. Details are not described.

Based on the method shown in FIG. 10, when the transmitter device performs the x^{th} data retransmission, the sent Ex bits may include the bits repeated one or more times among the bits included in the initial data transmission to the x^{th} data retransmission. Therefore, through local retransmission, decoding performance of a polar code used for HARQ transmission is improved, and performance stability and flexibility of the polar code are improved.

In addition, in this embodiment of this application, a series of first positions are defined, so that local retransmission can be introduced based on the first position, thereby improving performance stability of a polar code used for HARQ transmission. In addition, the polar code used for HARQ transmission provided in this embodiment of this application may further support 1-bit fine-grained transmission, thereby helping improve decoding performance.

Optionally, the foregoing embodiment is described by using an example in which the encoded bit sequence (that is, the first sequence) that can be used for a plurality of retransmissions is directly obtained, and then bits of a specific sending length are selected, for sending, from the first sequence based on a retransmission resource. It may be understood that online construction and encoding may be performed based on a retransmission resource each time, that is, the sending length may be first determined based on the retransmission resource, polar encoding is performed based on the sending length, and then sending is performed.

Optionally, in the foregoing embodiment, sending is described in the circular buffer manner. It may be understood that the foregoing process may alternatively be described directly by using a reading procedure in the encoded bit sequence. This is not limited.

In addition, different from the foregoing process of placing the first sequence in one circular buffer for sending, the second sequence and the third sequence in the first sequence may be placed in different circular buffers for sending. A specific sending process is the same as the foregoing process of placing the first sequence in one circular buffer for sending. Details are not described again.

It should be noted that various embodiments of this application may be implemented separately, or may be implemented in combination. This is not limited. Unless otherwise stated or there is a logic conflict, terms and/or descriptions in different embodiments provided by this application are consistent and may be mutually referenced, and technical features in different embodiments may be combined based on an internal logical relationship thereof, to form a new embodiment.

It may be understood that an execution body may perform a part or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with the algorithms and the steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into function modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module is obtained through division based on each corresponding function, FIG. 12 shows a transmitter device 120. The transmitter device 120 may perform actions performed by the transmitter device in the methods shown in FIG. 10 and FIG. 11A and FIG. 11B. All related content of the steps in the foregoing method embodiments may be referenced in functional descriptions of corresponding functional modules. For technical effect that can be achieved by the transmitter device 120, refer to the foregoing method embodiments. Details are not described herein again.

The transmitter device 120 may include a transceiver module 1201 and a processing module 1202. For example, the transmitter device 120 may be a communication device, or may be a chip used in a communication device, or another combined device or component that has a function of the transmitter device. When the transmitter device 120 is the communication device, the transceiver module 1201 may be a transceiver, where the transceiver may include an antenna, a radio frequency circuit, and the like; and the processing module 1202 may be a processor (or a processing circuit), for example, a baseband processor, where the baseband processor may include one or more CPUs. When the transmitter device 120 is the component that has the function of the transmitter device, the transceiver module 1201 may be a radio frequency unit; and the processing module 1202 may be a processor (or a processing circuit), for example, a baseband processor. When the transmitter device 120 is a chip system, the transceiver module 1201 may be an input/output interface of a chip (for example, a baseband chip); and the processing module 1202 may be a processor (or a processing circuit) of the chip system, and may include one or more central processing units. It should be understood that the transceiver module 1201 in this embodiment of this application may be implemented by the transceiver or a transceiver-related circuit component; and the processing module 1202 may be implemented by the processor or a processor-related circuit component (or referred to as the processing circuit).

For example, the transceiver module 1201 may be configured to perform all receiving and sending operations performed by the transmitter device in embodiments shown in FIG. 10 and FIG. 11A and FIG. 11B, and/or configured to support another process of the technology described in this specification. The processing module 1202 may be configured to perform all operations other than the receiving and sending operations performed by the transmitter device in embodiments shown in FIG. 10 and FIG. 11A and FIG. 11B, and/or configured to support another process of the technology described in this specification.

For example, the processing module 1202 is configured to perform polar encoding on an information bit sequence with a length of K to obtain a first sequence with a length of M₀, where K is less than or equal to M₀; and the transceiver module 1201 is configured to: when x^{th} data retransmission is performed, send Ex bits in the first sequence, where x is a positive integer, and one or more bits among the Ex bits are bits repeated one or more times among bits from initial data transmission to the x^{th} data retransmission.

In a possible design, the transceiver module 1201 is specifically configured to send bits at a start position to a first position Bx of the x^{th} data retransmission and the one or more bits among the Ex bits, where the first position Bx is a predefined first position.

In a possible design, the first position Bx is a predefined first position immediately preceding an end position of the x^{th} data retransmission, and the end position of the x^{th} data retransmission is determined based on the start position of the x^{th} data retransmission and a sending length Ex of the x^{th} data retransmission.

In a possible design, the first sequence includes one or more predefined first positions.

In a possible design, the first position is a position of a bit that can be successfully decoded in the first sequence.

In a possible design, the predefined first position includes a position of one or more of the following bits: a position of an (M₀/2)^{th} bit, a position of a (3M₀/8)^{th} bit, a position of an (M₀/4)^{th} bit, a position of an (M₀/8)^{th} bit, and a position of a 0^{th} bit.

In a possible design, the predefined first position includes a position of one or more of the following bits: a position of an (M₀/2)^{th} bit, a position of a (7M₀/16)^{th} bit, a position of a (3M₀/8)^{th} bit, a position of a (5M₀/16)^{th} bit, a position of an (M₀/4)^{th} bit, a position of a (3M₀/16)^{th} bit, a position of an (M₀/8)^{th} bit, a position of an (M₀/16)^{th} bit, and a position of a 0^{th} bit.

In a possible design, the predefined first position includes a position of one or more of the following bits: a position of an (M₀/2)^{th} bit, a position of a (15M₀/32)^{th} bit, a position of a (7M₀/16)^{th} bit, a position of a (13M₀/32)^{th} bit, a position of a (3M₀/8)^{th} bit, a position of an (11M₀/32)^{th} bit, a position of a (5M₀/16)^{th} bit, a position of a (9M₀/32)^{th} bit, a position of an (M₀/4)^{th} bit, a position of a (7M₀/32)^{th} bit, a position of a (3M₀/16)^{th} bit, a position of a (5M₀/32)^{th} bit, a position of an (M₀/8)^{th} bit, a position of a (3M₀/32)^{th} bit, a position of an (M₀/16)^{th} bit, a position of an (M₀/32)^{th} bit, and a position of a 0^{th} bit.

In a possible design, the transceiver module 1201 is specifically configured to: when a ratio of a first quantity to a second quantity is greater than a preset code rate threshold, send the Ex bits in the first sequence, where the first quantity is a quantity of information bits at the end position to the first position Bx of the x^{th} data retransmission, and the second quantity is a quantity of bits at the end position to the first position Bx of the x^{th} data retransmission.

In a possible design, the first sequence includes a second sequence with a length of M₁ and a third sequence with a length of (M₀-M₁), and the transceiver module 1201 is specifically configured to: when the end position of the x^{th} data retransmission is after the second sequence and before a 1^{st} first position of the third sequence, send the Ex bits in the first sequence, where the end position of the x^{th} data retransmission is determined based on the start position of the x^{th} data retransmission and the sending length Ex of the x^{th} data retransmission.

In a possible design, the transceiver module 1201 is further configured to: when the end position of the x^{th} data retransmission is after the 1^{st} first position of the third sequence, send Ex bits at the start position of the x^{th} data retransmission to the end position of the x^{th} data retransmission.

In a possible design, a start bit of the one or more bits among the Ex bits is a bit at the start position of the x^{th} data retransmission; or a start bit of the one or more bits among the Ex bits is a bit at a start position of (x-1)^{th} data retransmission; or a start bit of the one or more bits among the Ex bits is a bit at a start position of the initial data transmission; or a start bit of the one or more bits among the Ex bits is a bit at a predefined position; or a start bit of the one or more bits among the Ex bits is a bit at a second position before the first position Bx, where the first position Bx is the predefined first position, and bits at the second position to the first position Bx are the one or more bits.

In a possible design, the processing module 1202 is specifically configured to: perform polar encoding on the information bit sequence to obtain a fourth sequence with a length of N₀; and perform rate matching on the fourth sequence to obtain the first sequence.

In a possible design, when a rate matching manner is shortening, a shortened bit in the fourth sequence is removed to obtain the first sequence; or when a rate matching manner is puncturing or repetition, the first sequence is the fourth sequence.

In a possible design, the processing module 1202 is specifically configured to: perform polar encoding on the information bit sequence to obtain a fourth sequence with a length of N₀; and interleave the fourth sequence to obtain the first sequence.

In a possible design, the processing module 1202 is specifically configured to interleave the fourth sequence based on a plurality of interleaving patterns to obtain the first sequence, where different interleaving patterns correspond to different bits in the fourth sequence.

In a possible design, a fifth sequence in the fourth sequence is interleaved based on a first interleaving pattern, and a sixth sequence in the fourth sequence is interleaved based on a second interleaving pattern, to obtain the first sequence, where the fourth sequence includes the fifth sequence with a length of N₁ and the sixth sequence with a length of (N₀-N₁).

FIG. 13 shows a receiver device 130. The receiver device 130 may perform actions performed by the receiver device in the methods shown in FIG. 10 and FIG. 11A and FIG. 11B. All related content of the steps in the foregoing method embodiments may be referenced in functional descriptions of corresponding functional modules. For technical effect that can be achieved by the receiver device 130, refer to the foregoing method embodiments. Details are not described herein again.

The receiver device 130 may include a transceiver module 1301 and a processing module 1302. For example, the receiver device 130 may be a communication device, or may be a chip used in a communication device, or another combined device or component that has a function of the receiver device. When the receiver device 130 is the communication device, the transceiver module 1301 may be a transceiver, where the transceiver may include an antenna, a radio frequency circuit, and the like; and the processing module 1302 may be a processor (or a processing circuit), for example, a baseband processor, where the baseband processor may include one or more CPUs. When the receiver device 130 is the component that has the function of the receiver device, the transceiver module 1301 may be a radio frequency unit; and the processing module 1302 may be a processor (or a processing circuit), for example, a baseband processor. When the receiver device 130 is a chip system, the transceiver module 1301 may be an input/output interface of a chip (for example, a baseband chip); and the processing module 1302 may be a processor (or a processing circuit) of the chip system, and may include one or more central processing units. It should be understood that the transceiver module 1301 in this embodiment of this application may be implemented by the transceiver or a transceiver-related circuit component; and the processing module 1302 may be implemented by the processor or a processor-related circuit component (or referred to as the processing circuit).

For example, the transceiver module 1301 may be configured to perform all receiving and sending operations performed by the receiver device in embodiments shown in FIG. 10 and FIG. 11A and FIG. 11B, and/or configured to support another process of the technology described in this specification. The processing module 1302 may be configured to perform all operations other than the receiving and sending operations performed by the receiver device in embodiments shown in FIG. 10 and FIG. 11A and FIG. 11B, and/or configured to support another process of the technology described in this specification.

For example, the transceiver module 1301 is configured to receive a symbol sequence from a transmitter device; and the processing module 1302 is configured to decode the symbol sequence based on positions of one or more bits to obtain decoded data, where the positions of the one or more bits are positions of bits repeated one or more times among bits from initial data transmission to x^{th} data retransmission, and x is a positive integer.

In a possible design, a position of a start bit of the one or more bits is a start position of the x^{th} data retransmission; or a position of a start bit of the one or more bits is a start position of (x-1)^{th} data retransmission; or a position of a start bit of the one or more bits is a start position of the initial data transmission; or a position of a start bit of the one or more bits is a predefined position; or a position of a start bit of the one or more bits is a second position before a first position Bx, where the first position Bx is a predefined first position, and the second position to the first position Bx are the positions of the one or more bits.

In another possible implementation, the transceiver module 1201 in FIG. 12 may be replaced with a transceiver, and a function of the transceiver module 1201 may be integrated into the transceiver. The processing module 1202 may be replaced with a processor, and a function of the processing module 1202 may be integrated into the processor. Further, the transmitter device 120 shown in FIG. 12 may further include a memory. Alternatively, the transceiver module 1301 in FIG. 13 may be replaced with a transceiver, and a function of the transceiver module 1301 may be integrated into the transceiver. The processing module 1302 may be replaced with a processor, and a function of the processing module 1302 may be integrated into the processor. Further, the receiver device 130 shown in FIG. 13 may further include a memory.

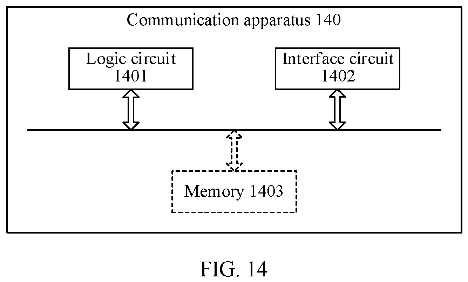

Alternatively, when the processing module 1202 is replaced with a processor, and the transceiver module 1201 is replaced with a transceiver, the transmitter device 120 in this embodiment of this application may be alternatively the communication apparatus 140 shown in FIG. 14. Alternatively, when the processing module 1302 is replaced with a processor, and the transceiver module 1301 is replaced with a transceiver, the receiver device 130 in this embodiment of this application may be alternatively the communication apparatus 140 shown in FIG. 14.

The processor may be a logic circuit 1401, and the transceiver may be an interface circuit 1402. Further, the communication apparatus 140 shown in FIG. 14 may further include a memory 1403.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may also be an external storage device of the foregoing terminal, for example, a plug-in hard disk, a smart memory card (smart media card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. "First" and "second" are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. ''Multiple'' refers to two or more than two. "At least two (items)" means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device; and "Receiving information from ... (a terminal device)" may be understood as that a source of the information is the terminal device, and may include directly or indirectly receiving the information from the terminal device. Information may undergo necessary processing, for example, a format change, between a source end and a destination end for sending of the information. However, the destination end may understand valid information from the source end.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
performing polar encoding on an information bit sequence with a length of K to obtain a first sequence with a length of M₀, wherein K is less than or equal to M₀; and
when x^{th} data retransmission is performed, sending Ex bits in the first sequence, wherein x is a positive integer, and one or more bits among the Ex bits are bits repeated one or more times among bits from initial data transmission to the x^{th} data retransmission.

2. The method according to claim 1, wherein the sending the Ex bits in the first sequence comprises:
sending bits at a start position to a first position Bx of the x^{th} data retransmission and the one or more bits among the Ex bits, wherein the first position Bx is a predefined first position.

3. The method according to claim 2, wherein
the first position Bx is a predefined first position immediately preceding an end position of the x^{th} data retransmission, and the end position of the x^{th} data retransmission is determined based on the start position of the x^{th} data retransmission and a sending length Ex of the x^{th} data retransmission.

4. The method according to claim 2 or 3, wherein
the first sequence comprises one or more predefined first positions.

5. The method according to any one of claims 2 to 4, wherein
the predefined first position comprises a position of one or more of the following bits: a position of an (M₀/2)^{th} bit, a position of a (3M₀/8)^{th} bit, a position of an (M₀/4)^{th} bit, a position of an (M₀/8)^{th} bit, and a position of a 0^{th} bit; or
the predefined first position comprises a position of one or more of the following bits: a position of an (M₀/2)^{th} bit, a position of a (7M₀/16)^{th} bit, a position of a (3M₀/8)^{th} bit, a position of a (5M₀/16)^{th} bit, a position of an (M₀/4)^{th} bit, a position of a (3M₀/16)^{th} bit, a position of an (M₀/8)^{th} bit, a position of an (M₀/16)^{th} bit, and a position of a 0^{th} bit; or
the predefined first position comprises a position of one or more of the following bits: a position of an (M₀/2)^{th} bit, a position of a (15M₀/32)^{th} bit, a position of a (7M₀/16)^{th} bit, a position of a (13M₀/32)^{th} bit, a position of a (3M₀/8)^{th} bit, a position of an (11M₀/32)^{th} bit, a position of a (5M₀/16)^{th} bit, a position of a (9M₀/32)^{th} bit, a position of an (M₀/4)^{th} bit, a position of a (7M₀/32)^{th} bit, a position of a (3M₀/16)^{th} bit, a position of a (5M₀/32)^{th} bit, a position of an (M₀/8)^{th} bit, a position of a (3M₀/32)^{th} bit, a position of an (M₀/16)^{th} bit, a position of an (M₀/32)^{th} bit, and a position of a 0^{th} bit.

6. The method according to any one of claims 2 to 5, wherein the sending the Ex bits in the first sequence comprises:
when a ratio of a first quantity to a second quantity is greater than a preset code rate threshold, sending the Ex bits in the first sequence, wherein the first quantity is a quantity of information bits at the end position to the first position Bx of the x^{th} data retransmission, and the second quantity is a quantity of bits at the end position to the first position Bx of the x^{th} data retransmission.

7. The method according to any one of claims 2 to 5, wherein the first sequence comprises a second sequence with a length of M₁ and a third sequence with a length of (M₀-M₁), and the sending the Ex bits in the first sequence comprises:
when the end position of the x^{th} data retransmission is after the second sequence and before a 1^{st} first position of the third sequence, sending the Ex bits in the first sequence, wherein the end position of the x^{th} data retransmission is determined based on the start position of the x^{th} data retransmission and the sending length Ex of the x^{th} data retransmission.

8. The method according to claim 7, wherein the method further comprises:
when the end position of the x^{th} data retransmission is after the 1^{st} first position of the third sequence, sending Ex bits at the start position of the x^{th} data retransmission to the end position of the x^{th} data retransmission.

9. The method according to any one of claims 1 to 8, wherein
a start bit of the one or more bits among the Ex bits is a bit at the start position of the x^{th} data retransmission; or
a start bit of the one or more bits among the Ex bits is a bit at a start position of (x-1)^{th} data retransmission; or
a start bit of the one or more bits among the Ex bits is a bit at a start position of the initial data transmission; or
a start bit of the one or more bits among the Ex bits is a bit at a predefined position; or
a start bit of the one or more bits among the Ex bits is a bit at a second position before the first position Bx, wherein the first position Bx is the predefined first position, and bits at the second position to the first position Bx are the one or more bits.

10. The method according to any one of claims 1 to 9, wherein the performing polar encoding on the information bit sequence with a length of K to obtain the first sequence with a length of M₀ comprises:
performing polar encoding on the information bit sequence to obtain a fourth sequence with a length of N₀; and
performing rate matching on the fourth sequence to obtain the first sequence.

11. The method according to claim 10, wherein
when a rate matching manner is shortening, a shortened bit in the fourth sequence is removed to obtain the first sequence; or
when a rate matching manner is puncturing or repetition, the first sequence is the fourth sequence.

12. The method according to any one of claims 1 to 9, wherein the performing polar encoding on the information bit sequence with a length of K to obtain the first sequence with a length of M₀ comprises:
performing polar encoding on the information bit sequence to obtain a fourth sequence with a length of N₀; and
interleaving the fourth sequence to obtain the first sequence.

13. The method according to claim 12, wherein the interleaving the fourth sequence to obtain the first sequence comprises:
interleaving the fourth sequence based on a plurality of interleaving patterns to obtain the first sequence, wherein different interleaving patterns correspond to different bits in the fourth sequence.

14. The method according to claim 13, wherein
a fifth sequence in the fourth sequence is interleaved based on a first interleaving pattern, and a sixth sequence in the fourth sequence is interleaved based on a second interleaving pattern, to obtain the first sequence, wherein the fourth sequence comprises the fifth sequence with a length of N₁ and the sixth sequence with a length of (N₀-N₁).

15. A communication method, comprising:
receiving a symbol sequence from a transmitter device; and
decoding the symbol sequence based on positions of one or more bits to obtain decoded data, wherein the positions of the one or more bits are positions of bits repeated one or more times among bits from initial data transmission to x^{th} data retransmission, and x is a positive integer.

16. The method according to claim 15, wherein
a position of a start bit of the one or more bits is a start position of the x^{th} data retransmission; or
a position of a start bit of the one or more bits is a start position of (x-1)^{th} data retransmission; or
a position of a start bit of the one or more bits is a start position of the initial data transmission; or
a position of a start bit of the one or more bits is a predefined position; or
a position of a start bit of the one or more bits is a second position before a first position Bx, wherein the first position Bx is a predefined first position, and the second position to the first position Bx are the positions of the one or more bits.

17. A communication apparatus, comprising:
a processing module, configured to perform polar encoding on an information bit sequence with a length of K to obtain a first sequence with a length of M₀, wherein K is less than or equal to M₀; and
a transceiver module, configured to: when x^{th} data retransmission is performed, send Ex bits in the first sequence, wherein x is a positive integer, and one or more bits among the Ex bits are bits repeated one or more times among bits from initial data transmission to the x^{th} data retransmission.

18. A communication apparatus, comprising:
a transceiver module, configured to receive a symbol sequence from a transmitter device; and
a processing module, configured to decode the symbol sequence based on positions of one or more bits to obtain decoded data, wherein the positions of the one or more bits are positions of bits repeated one or more times among bits from initial data transmission to the x^{th} data retransmission, and x is a positive integer.

19. A communication apparatus, wherein the communication apparatus comprises a processor, and the processor is configured to run a computer program or instructions, so that the communication method according to any one of claims 1 to 14 is performed, or the communication method according to claim 15 or 16 is performed.

20. The communication apparatus according to claim 19, wherein
the communication apparatus further comprises a memory, and the memory is configured to store the computer program or the instructions.

21. A communication apparatus, wherein the communication apparatus comprises an interface circuit and a logic circuit, the interface circuit is configured to input and/or output information, and the logic circuit is configured to perform the communication method according to any one of claims 1 to 14, or perform the communication method according to claim 15 or 16, to perform processing based on the information and/or generate the information.

22. A computer-readable storage medium, wherein the computer-readable storage medium stores computer instructions or a program, and when the computer instructions or the program is run on a computer, the communication method according to any one of claims 1 to 14 is performed, or the communication method according to claim 15 or 16 is performed.

23. A computer program product, wherein the computer program product comprises computer instructions, and when a part or all of the computer instructions are run on a computer, the communication method according to any one of claims 1 to 14 is performed, or the communication method according to claim 15 or 16 is performed.
